(19) Europäisches Patentamt
European Patent Office
Office européen des brevets

(11) **EP 4 787 519 A1**

(12) **EUROPEAN PATENT APPLICATION**
published in accordance with Art. 153(4) EPC

(43) Date of publication:
**05.08.2026 Bulletin 2026/32**

(21) Application number: **23954353.1**

(22) Date of filing: **29.09.2023**

(51) International Patent Classification (IPC):
$H01M\ 10/052^{(2010.01)}$    $H01M\ 4/13^{(2010.01)}$
$H01M\ 4/48^{(2010.01)}$    $H01M\ 4/485^{(2010.01)}$
$H01M\ 4/505^{(2010.01)}$    $H01M\ 4/525^{(2010.01)}$
$H01M\ 4/58^{(2010.01)}$    $H01M\ 4/62^{(2006.01)}$
$H01M\ 10/0562^{(2010.01)}$

(52) Cooperative Patent Classification (CPC):
**H01M 4/13; H01M 4/48; H01M 4/485; H01M 4/505;
H01M 4/525; H01M 4/58; H01M 4/62;
H01M 10/052; H01M 10/0562;** Y02E 60/10

(86) International application number:
**PCT/JP2023/035660**

(87) International publication number:
**WO 2025/069384 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Nagoya Institute Of Technology
Nagoya-shi, Aichi 466-8555 (JP)**
• **NGK Insulators, Ltd.
Nagoya-shi, Aichi 467-8530 (JP)**

(72) Inventors:
• **MIYAZAKI, Reona
Nagoya-Shi, Aichi 466-8555 (JP)**
• **YAGI, En
Nagoya-shi, Aichi 467-8530 (JP)**
• **TAKAHASHI, Haruto
Nagoya-shi, Aichi 467-8530 (JP)**
• **YOSHIDA, Toshihiro
Nagoya-shi, Aichi 467-8530 (JP)**

(74) Representative: **Mewburn Ellis LLP
Aurora Building
Counterslip
Bristol BS1 6BX (GB)**

(54) **BATTERY**

(57) There is provided an intrinsically safe battery that can be stably charged and discharged at a high temperature of 80°C or higher, and that can exhibit high coulombic efficiency and a high cycle capacity retention rate. The battery includes a positive electrode containing a positive electrode active material, a negative electrode containing a negative electrode active material capable of inserting and extracting carrier ions at 0.1 V (vs. Li/Li$^+$) or higher, and an electrolyte layer disposed between the positive electrode and the negative electrode. At least one of the positive electrode, the negative electrode, and the electrolyte layer contains a solid electrolyte represented by $M^{\alpha}_a M^{\beta}_b, M^{\gamma}_c X_d$, wherein $M^{\alpha}$ is at least one selected from the group consisting of Li, Na, and K; $M^{\beta}$ is an element that provides a trivalent cation; $M^{\gamma}$ is an element that provides a tetravalent cation; X is at least one selected from the group consisting of F, Cl, Br, and I; and a, b, c, and d satisfy $0.9(3-x) \leq a \leq 1.1(3-x)$, $0.9(1-x) \leq b \leq 1.1(1-x)$, $0.9x \leq c \leq 1.1x$, $5.4 \leq d \leq 6.6$, and $0 < x < 1$.

FIG. 1

EP 4 787 519 A1

**Description**

TECHNICAL FIELD

The present disclosure relates to a battery.

BACKGROUND ART

In recent years, with the development of personal computers, mobile phones, and other portable devices, the demand for batteries as power sources for these devices has expanded significantly. In batteries used for such purposes, organic electrolytic solutions in which electrolytes are dissolved in flammable organic solvents have conventionally been used as media for ion transfer. Batteries containing such organic electrolytic solutions may cause safety problems, such as fire and explosion. Therefore, in order to ensure intrinsic safety, the development of all-solid-state batteries that use solid electrolytes in place of organic electrolytic solutions is underway. Such all-solid-state batteries are intrinsically safe because their electrolytes are made of non-flammable materials, eliminating the risk of fire or explosion.

Materials that react with moisture to produce toxic hydrogen sulfide gas, such as sulfide-based solid electrolytes, are widely known as solid electrolytes. On the other hand, oxide-based solid electrolytes that do not produce toxic gas, such as hydrogen sulfide, are also being widely developed. However, since densification by high-temperature sintering is required to increase conductivity, there is a problem that such solid electrolytes react with active materials during battery production, resulting in high resistance.

In recent years, halogenated solid electrolytes have been proposed. For example, Patent Literature 1 (WO2019/135315) discloses a solid electrolyte material represented by the composition formula $Li_3YX_6$, wherein X is two or more elements selected from the group consisting of Cl, Br, and I, and also discloses a battery containing this solid electrolyte material in at least one of a positive electrode, a negative electrode, and an electrolyte layer. Patent Literature 2 (WO2023/013390) discloses a solid electrolyte material represented by $Li_{6-(4-x)b}(Zr_{1-x}Al_x)_bF_6$, wherein $0<x<1$ and $0<b\leq1.5$, and having predetermined XRD peak profiles, and also discloses a battery containing this solid electrolyte material in at least one of a positive electrode, a negative electrode, and an electrolyte layer.

CITATION LIST

PATENT LITERATURE

Patent Literature 1: WO2019/135315
Patent Literature 2: WO2023/013390

SUMMARY OF INVENTION

However, the halogenated solid electrolyte disclosed in Patent Literature 1 is thermally unstable and inferior in charge/discharge performance at high temperatures. The solid electrolyte disclosed in Patent Literature 2 has low ion conductivity.

The present inventors have now found that by incorporating a halogenated solid electrolyte having a specific composition into at least one of a positive electrode, a negative electrode, and an electrolyte layer, it is possible to provide an intrinsically safe battery that can be stably charged and discharged at a high temperature of 80°C or higher, and that can exhibit high coulombic efficiency and a high cycle capacity retention rate.

Therefore, an object of the present invention is to provide an intrinsically safe battery that can be stably charged and discharged at a high temperature of 80°C or higher, and that can exhibit high coulombic efficiency and a high cycle capacity retention rate.

The present disclosure provides the following aspects.

[Aspect 1]

A battery comprising:

a positive electrode containing a positive electrode active material,
a negative electrode containing a negative electrode active material capable of inserting and extracting carrier ions at 0.1 V (vs. Li/Li$^+$) or higher, and

an electrolyte layer disposed between the positive electrode and the negative electrode,
wherein at least one of the positive electrode, the negative electrode, and the electrolyte layer contains a solid electrolyte represented by the following composition formula:

$$M^\alpha_a M^\beta_b M^\gamma_c X_d$$

wherein $M^\alpha$ is at least one selected from the group consisting of Li, Na, and K; $M^\beta$ is an element that provides a trivalent cation; $M^\gamma$ is an element that provides a tetravalent cation; X is at least one selected from the group consisting of F, Cl, Br, and I; and a, b, c, and d satisfy:

$$0.9(3-x) \le a \le 1.1(3-x),$$

$$0.9(1-x) \le b \le 1.1(1-x),$$

$$0.9x \le c \le 1.1x,$$

$$5.4 \le d \le 6.6,$$

and

$$0 < x < 1.$$

[Aspect 2]

The battery according to aspect 1, wherein the positive electrode, the negative electrode, and the electrolyte layer each contain the solid electrolyte.

[Aspect 3]

The battery according to aspect 1 or 2, wherein $M\alpha$ contains Li.

[Aspect 4]

The battery according to any one of aspects 1 to 3, wherein $M\beta$ contains Al.

[Aspect 5]

The battery according to any one of aspects 1 to 4, wherein $M\gamma$ contains Si and/or Ge.

[Aspect 6]

The battery according to any one of aspects 1 to 5, wherein X contains F.

[Aspect 7]

The battery according to any one of aspects 1 to 6, wherein $M^\alpha$ contains Li, $M^\beta$ contains Al, $M^\gamma$ contains Si, and X contains F.

[Aspect 8]

The battery according to any one of aspects 1 to 7, wherein the solid electrolyte is represented by $Li_a Al_b Si_c F_d$.

[Aspect 9]

The battery according to any one of aspects 1 to 8, wherein the positive electrode active material contains at least one selected from the group consisting of lithium nickel manganate (LNMO), lithium nickel cobalt manganate (NCM), lithium cobaltate (LCO), lithium nickel cobalt aluminate (NCA), and lithium iron phosphate (LFP).

[Aspect 10]

The battery according to any one of aspects 1 to 9, wherein the negative electrode active material contains at least one selected from the group consisting of lithium titanate (LTO), SiO, Si or Si alloy, and $TiO_2$.

[Aspect 11]

The battery according to any one of aspects 1 to 10, wherein no part of the positive electrode, the negative electrode, and the electrolyte layer contains a sulfide.

BRIEF DESCRIPTION OF DRAWINGS

Figure 1 is a schematic cross-sectional view showing an example of an all-solid-state battery according to the present invention.
Figure 2 is a charge/discharge curve of the all-solid-state battery produced in Example 1 (Comparative Example).
Figure 3 is a charge/discharge curve of the all-solid-state battery produced in Example 2.
Figure 4 is a charge/discharge curve of the all-solid-state battery produced in Example 4.

DESCRIPTION OF EMBODIMENTS

Battery

The battery of the present invention is typically an all-solid-state battery. However, the battery of the present invention is not limited to an all-solid-state battery, and may be a so-called semi-solid battery, which is a battery using a combination of a solid material (e.g., a solid electrolyte) and a liquid material (e.g., an electrolytic solution or an ionic liquid), or may be any other type of battery.

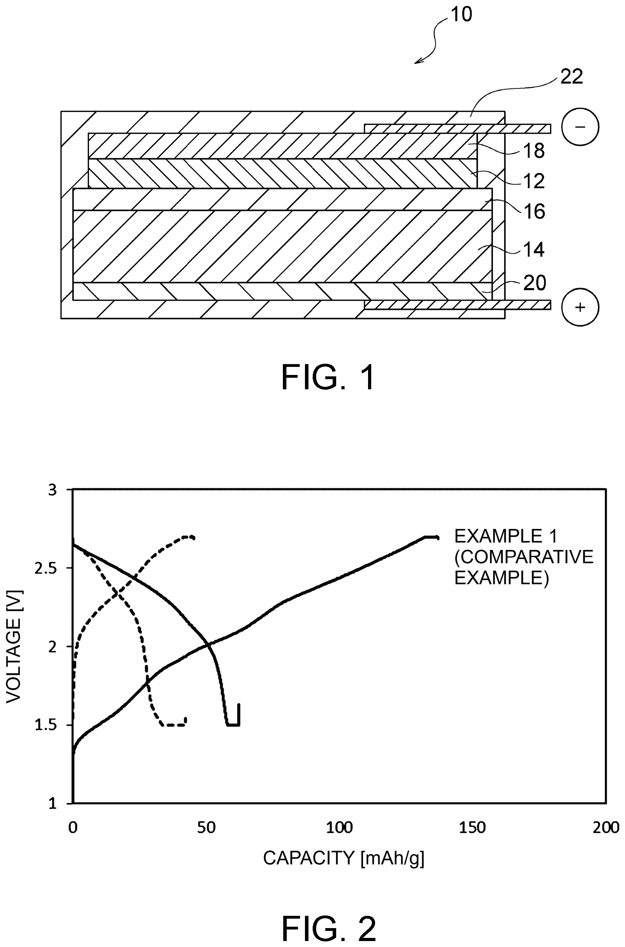

Figure 1 schematically shows an example of an all-solid-state battery 10 according to the present invention. The battery 10 contains a positive electrode 12, a negative electrode 14, and an electrolyte layer 16. The positive electrode 12 contains a positive electrode active material. The negative electrode 14 contains a negative electrode active material capable of inserting and extracting carrier ions at 0.1 V (vs. Li/Li$^+$) or higher. The electrolyte layer 16 is disposed between the positive electrode 12 and the negative electrode 14. At least one of the positive electrode 12, the negative electrode 14, and the electrolyte layer 16 contains a solid electrolyte. The solid electrolyte is represented by $M^\alpha_a M^\beta_b M^\gamma_c X_d$, wherein $M\alpha$ is at least one selected from the group consisting of Li, Na, and K; $M^\beta$ is an element that provides a trivalent cation; $M^\gamma$ is an element that provides a tetravalent cation; X is at least one selected from the group consisting of F, Cl, Br, and I; and a, b, c, and d satisfy $0.9(3-x) \leq a \leq 1.1(3-x)$, $0.9(1-x) \leq b \leq 1.1(1-x)$, $0.9x \leq c \leq 1.1x$, $5.4 \leq d \leq 6.6$, and $0 < x < 1$. By incorporating a halogenated solid electrolyte having the above composition into at least one of the positive electrode 12, the negative electrode 14, and the electrolyte layer 16, it is possible to provide an intrinsically safe battery 10 that can be stably charged and discharged (of course, at room temperature) at a high temperature of 80°C or higher (e.g., 100°C or 150°C), and that can exhibit high coulombic efficiency and a high cycle capacity retention rate.

That is, since the halogenated solid electrolyte of the above composition used in the present invention is a non-flammable and chemically stable material, it is possible to provide an intrinsically safe battery. In addition, this solid electrolyte can be densified by pressure during press molding rather than sintering, and therefore does not cause an increase in resistance due to the reaction with active materials during battery production. Furthermore, solid electrolytes containing halogen elements, such as F, exhibit high electrochemical stability and high thermal stability, thereby enabling the realization of all-solid-state batteries that can be stably charged and discharged at a high temperature of 80°C or higher, and that have high coulombic efficiency and a high cycle capacity retention rate. In this respect, conventional halogenated solid electrolytes such as those disclosed in Patent Literatures 1 and 2 or batteries using such halogenated solid electrolytes have problems that they are thermally unstable and inferior in charge/discharge performance at high temperatures, and have low ion conductivity; however, these problems can be successfully solved by the present invention.

As described above, the battery 10 of the present invention is typically an all-solid-state battery or an all-solid-state secondary battery. For example, the battery 10 can be a lithium-ion secondary battery (typically an all-solid-state lithium-ion secondary battery), a sodium-ion secondary battery (typically an all-solid-state sodium-ion secondary battery), or a potassium-ion secondary battery (typically an all-solid-state potassium ion secondary battery). Particularly preferred is an all-solid-state lithium-ion secondary battery. Therefore, the following description of the positive electrode 12 and the negative electrode 14 is primarily based on an all-solid-state lithium-ion secondary battery, but does not exclude the application of the present invention to other batteries.

The positive electrode 12 contains a positive electrode active material. The positive electrode active material preferably contains a lithium composite oxide. Examples of the lithium composite oxide include lithium nickel manganate (LNMO) (typically $LiNi_{0.5}Mn_{1.5}O_4$), lithium nickel cobalt manganate (NCM) (typically $Li(Ni,Co,Mn)O_2$), lithium cobaltate (LCO) (typically $LiCoO_2$), lithium nickel cobalt aluminate (NCA) (typically $Li(Ni,Co,Al)O_2$), lithium iron phosphate (LFP) (typically $LiFePO_4$), and a combination thereof. NCM, LCO, and NCA have a layered rock salt structure. LNMO has a spinel structure. LFP has an olivine structure. Preferred is a lithium composite oxide having a layered rock salt structure, an example of which is NCM. It is preferable that the positive electrode 12 further contains a solid electrolyte and/or an electron conduction aid (e.g., carbon black) in addition to the positive electrode active material. The positive electrode 12 in the present embodiment is formed by integrating these substances by applying pressure and heat. Therefore, as shown in Figure 1, the positive electrode 12 is typically in the form of a positive electrode layer. When the positive electrode 12 contains a solid electrolyte, it is preferable to use the solid electrolyte described later.

The negative electrode 14 contains a negative electrode active material capable of inserting and extracting carrier ions at 0.1 V (vs. $Li/Li^+$) or higher. The carrier ions are not particularly limited because they are inevitably determined depending on the type of battery 10. For example, the carrier ions are lithium ions in lithium-ion secondary batteries, sodium ions in sodium-ion secondary batteries, and potassium ions in potassium-ion secondary batteries. The voltage at 0.1 V (vs. $Li/Li^+$) or higher can be applied to not only lithium ions, but also sodium ions and potassium ions (because the standard electrode potential of Na is higher by 0.33 V than the standard electrode potential of Li, and the standard electrode potential of K is higher by 0.11 V than the standard electrode potential of Li). Examples of the negative electrode active material include lithium titanate (LTO) (typically $Li_4Ti_5O_{12}$), SiO, Si or Si alloy, $TiO_2$, and a combination thereof. The negative electrode active material is preferably LTO, SiO, or $TiO_2$ in terms of non-flammability, and particularly preferably LTO in terms of cyclicity. LTO is typically known to have a spinel structure, but may have any other structure during charging and discharging. For example, the reaction of LTO proceeds in the coexistence of two phases, $Li_4Ti_5O_{12}$ (spinel structure) and $Li_7Ti_5O_{12}$ (rock salt structure), during charging and discharging. Therefore, LTO is not limited to one having a spinel structure. It is preferable that the negative electrode 14 further contains a solid electrolyte in addition to the negative electrode active material from the viewpoint of improving ion conductivity. The negative electrode 14 may further contain an electron conduction aid (e.g., carbon black). The negative electrode 14 in the present embodiment is formed by integrating these substances by applying pressure and heat. Therefore, as shown in Figure 1, the negative electrode 14 is typically in the form of a negative electrode layer. When the negative electrode 14 contains a solid electrolyte, it is preferable to use the solid electrolyte described later.

The electrolyte layer 16 is a layer containing an electrolyte disposed between the positive electrode 12 and the negative electrode 14. The electrolyte layer 16 typically contains a solid electrolyte, and is preferably composed of a solid electrolyte. In this case, it can be said that the electrolyte layer 16 serves as a separator. As the solid electrolyte contained in the electrolyte layer 16, it is preferable to use the solid electrolyte described later.

At least one of the positive electrode 12, the negative electrode 14, and the electrolyte layer 16 contains a solid electrolyte. The solid electrolyte is represented by the following composition formula:

$$M^\alpha{}_a M^\beta{}_b M^\gamma{}_c X_d$$

wherein $M^\alpha$ is at least one selected from the group consisting of Li, Na, and K; $M^\beta$ is an element that provides a trivalent cation; $M^\gamma$ is an element that provides a tetravalent cation; X is at least one selected from the group consisting of F, Cl, Br, and I; and a, b, c, and d satisfy:

$$0.9(3\text{-}x) \le a \le 1.1(3\text{-}x),$$

$$0.9(1\text{-}x) \le b \le 1.1(1\text{-}x),$$

$$0.9x \le c \le 1.1x,$$

$$5.4 \le d \le 6.6,$$

and

$$0 < x < 1.$$

This solid electrolyte exhibits high ion conductivity (e.g., lithium ion conductivity). Further, since this solid electrolyte is non-flammable and chemically stable, and does not produce hydrogen sulfide gas, an intrinsically safe battery 10 can be realized. However, not all of the positive electrode 12, the negative electrode 14, and the electrolyte layer 16 need to contain the solid electrolyte; at least one of them may contain the solid electrolyte.

The meaning of the composition formula described above is explained as follows. First, the solid electrolyte described above is typically obtained by mixing a compound containing $M^\alpha$, $M^\beta$, and X (e.g., $Li_3AlF_6$) and a compound represented by $M^\alpha_2M^\gamma X_6$ (e.g., $Li_2SiF_6$). For example, the solid electrolyte is obtained by mixing $M^\alpha_3M^\beta X_6$ and $M^\alpha_2M^\gamma X_6$. When $M^\alpha_3M^\beta X_6$ and $M^\alpha_2M^\gamma X_6$ are mixed in an amount ratio of $(1-x):x$ (provided that $0<x<1$), the composition formula of the solid electrolyte is represented by $M^\alpha_{3-x}M^\beta_{1-x}M^\gamma_x X_6$. If a tolerance range of $\pm 0.1$ times is allowed for this composition (i.e., a numerical range from a lower limit obtained by multiplying the value by 0.9 to an upper limit obtained by multiplying the value by 1.1), taking measurement errors and other factors into account, the amount ratios a:b:c:d of $M^\alpha$, $M^\beta$, $M^\gamma$, and X are $0.9(3-x)\leq a\leq 1.1(3-x)$, $0.9(1-x)\leq b\leq 1.1(1-x)$, $0.9x\leq c\leq 1.1x$, and $5.4\leq d\leq 6.6$, respectively, as described above. That is, it can be said that the desired performance (e.g., high ion conductivity) of the solid electrolyte can be obtained equally within these numerical ranges. In the above composition formula, it is preferable that $0.05\leq x\leq 0.8$ is satisfied, and more preferably $0.05\leq x\leq 0.6$. This can further improve ion conductivity, such as lithium ion conductivity.

$M^\alpha$ is at least one selected from the group consisting of Li, Na, and K. In the case of a lithium-ion secondary battery, $M\alpha$ preferably contains Li, and is more preferably Li. In the case of a sodium-ion secondary battery, $M\alpha$ preferably contains Na, and is more preferably Na. In the case of a potassium-ion secondary battery, $M\alpha$ preferably contains K, and is more preferably K. $M\beta$ is an element that provides a trivalent cation. Examples of the element that provides a trivalent cation include Al, Ga, In, Sc, Y, and La, and preferably Al. Therefore, $M\beta$ preferably contains Al. $M\gamma$ is an element that provides a tetravalent cation. Examples of the element that provides a tetravalent cation include Si, Ge, and Sn, preferably Si and/or Ge, and more preferably Si. Therefore, $M^\gamma$ preferably contains Si and/or Ge, and more preferably contains Si. X is at least one selected from the group consisting of F, Cl, Br, and I, and preferably F. Therefore, X preferably contains F. Particularly preferably, $M^\alpha$ contains Li, $M\beta$ contains Al, $M\gamma$ contains Si, and X contains F. Therefore, particularly preferred is a solid electrolyte represented by $Li_aAl_bSi_cF_d$, which has high lithium ion conductivity. With such a composition, a solid electrolyte having high lithium ion conductivity can be produced more reliably.

The solid electrolyte described above can be produced by subjecting (i) a mixture of a compound containing $M^\alpha$, $M\beta$, and X (e.g., $Li_3AlF_6$) and a compound represented by $M^\alpha_2M^\gamma X_6$ (e.g., $Li_2SiF_6$), or (ii) a mixture of a compound composed of $M\beta$ and X (e.g., $AlF_3$), a compound composed of $M^\alpha$ and X (e.g., LiF), and $M^\alpha_2M^\gamma X_6$ (e.g., $Li_2SiF_6$), to a mechanical milling process. In this way, a solid electrolyte having high ion conductivity can be produced. Although the reason for this is not necessarily clear, one possible reason is that by performing a mechanical milling process, $M\beta$ (e.g., Al) and $M\gamma$ (e.g., Si) are mixed together (e.g., $Si^{4+}$ is dissolved in $Al^{3+}$ solution) in a crystal structure containing $M\alpha$ (e.g., Li).

When determining whether an unknown solid electrolyte is the above solid electrolyte, chemical analysis of the unknown solid electrolyte may be performed to determine whether its constituent elements are $M^\alpha$, $M\beta$, $M\gamma$, or X. Further, in order to confirm whether an unknown solid electrolyte has the above composition formula, for example, Li, Al, and Si can be quantified using an ICP-emission spectrophotometer. F can be quantified by ion chromatography. When the solid electrolyte contains an element $M\beta$ other than Al, a measurement method capable of quantifying the element $M\beta$ may be selected as appropriate.

The solid electrolyte used in the present invention may be mixed with other substances (X such as Li may be contained) and used as an electrolyte material. In this case, the solid electrolyte is preferably, among the components contained in the electrolyte material, a component with the largest mass ratio, that is, the main component. The mass ratio of the main component in the electrolyte material is preferably 50 wt.% or more, more preferably 60 wt.% or more, and even more preferably 70 wt.% or more.

As described above, in the battery 10 of the present invention, sulfide-free materials can be used as the positive electrode 12, the negative electrode 14, and the electrolyte layer 16. That is, it is preferable that any part of the positive electrode 12, the negative electrode 14, and the electrolyte layer 16 does not contain sulfide. This makes it possible to provide an intrinsically safe battery 10 without producing toxic gas, such as hydrogen sulfide.

It is preferable that the battery 10 further includes a positive electrode current collector 18 and a negative electrode current collector 20. The positive electrode current collector 18 is preferably provided on the positive electrode 12 on the opposite side of the electrolyte layer 16, and the negative electrode current collector 20 is preferably provided on the negative electrode 14 on the opposite side of the electrolyte layer 16. Examples of the materials that constitute the positive electrode current collector 18 and the negative electrode current collector 20 include aluminum (Al), copper (Cu), titanium (Ti), nickel (Ni), stainless steel (SUS), carbon, platinum (Pt), platinum (Pt)/palladium (Pd), gold (Au), silver (Ag), ITO (indium-tin oxide film), and the like.

The container 22 is not particularly limited as long as it is a container that can store a single battery 10 or a stack of multiple batteries 10 stacked in series or parallel. In particular, when the battery 10 is an all-solid-state battery, there is no concern about leakage of the electrolytic solution, so the container 22 can have a relatively simple container shape. For example, it is possible to adopt a chip form for mounting on an electronic circuit or a laminate cell form for thin and wide space applications (e.g., a multilayer product of aluminum (Al)/polypropylene (PP)).

Method for Producing Solid Electrolyte

As an example of a preferred method for producing the solid electrolyte described above, the following describes a method in which $Li_3AlF_6$ (hereinafter referred to as LAF) and $Li_2SiF_6$ (hereinafter referred to as LSF) are mixed and subjected to a mechanical milling process.

First, a LAF powder is prepared. For example, a commercially available LiF (lithium fluoride) powder and a commercially available $AlF_3$ (aluminum fluoride) powder are weighed and mixed in a molar ratio of $LiF:AlF_3 = 3:1$. Subsequently, the resulting mixture is heated at a high temperature (e.g., 900°C) and then ground to obtain a LAF powder. The LAF powder may be produced by other methods.

On the other hand, a LSF powder is prepared. Although a commercially available LSF powder may be used, the LSF powder may be produced by a known method.

Next, the LAF powder and the LSF powder are mixed to obtain a mixed powder. The proportion of the amount of LSF in the total amount of LAF and LSF in the mixed powder is more than 0 mol% and less than 100 mol%, preferably from 5 to 80 mol%, and more preferably from 5 to 60 mol%.

The thus-obtained mixed powder is subjected to a mechanical milling process, thereby obtaining a solid electrolyte powder that can be used in the present invention. In an example of the mechanical milling process, a planetary ball mill is used. In a planetary ball mill, while a pot rotates on its axis, a stage holding the pot revolves, making it possible to generate extremely high impact energy. However, other types of grinders may be used to perform the mechanical milling process. The mechanical milling process may be performed at ordinary temperature; however, the temperature and other conditions may be changed as appropriate.

EXAMPLES

The present invention will be described in more detail with reference to the following examples. However, the present invention is not limited to the following examples.

Example 1 (Comparison)

(1) Production of LYC Solid Electrolyte Powder

A commercially available LiCl powder and a commercially available $YCl_3$ powder were weighed and mixed in a molar ratio of $LiCl:YCl_3 = 3:1$ in a glove box or dry room with a dew point of -40°C or lower, and the resulting mixture was processed by mechanical milling using a planetary ball mill, thereby obtaining a LYC solid electrolyte powder having a composition of $Li_3Y_1Cl_6$.

(2) Production of Positive Electrode Sheet

The LYC solid electrolyte powder, a lithium nickel cobalt manganate (NCM) powder as a positive electrode active material, and a carbon powder as a conductive aid were weighed and mixed in a volume ratio of LYC:NCM:carbon = 50:50:2, thereby obtaining a positive electrode mixed powder. An organic binder and an organic solvent were added to the resulting positive electrode mixed powder, followed by kneading, and a positive electrode sheet was produced by a doctor blade method.

(3) Production of Negative Electrode Sheet

The LYC solid electrolyte powder, a lithium titanate (LTO) powder as a negative electrode active material, and a carbon powder as a conductive aid were weighed and mixed in a volume ratio of LYC:LTO:carbon = 50:50:2, thereby obtaining a negative electrode mixed powder. An organic binder and an organic solvent were added to the resulting negative electrode mixed powder, followed by kneading, and a negative electrode sheet was produced by a doctor blade method.

(4) Production of Solid Electrolyte Sheet

An organic binder and an organic solvent were added to the LYC solid electrolyte powder, followed by kneading, and a solid electrolyte sheet was produced by a doctor blade method.

(5) Production of All-Solid-State Battery

The positive electrode sheet, the negative electrode sheet, and the solid electrolyte sheet were punched out with a punch to obtain a positive electrode sheet piece, a negative electrode sheet piece, and a solid electrolyte sheet piece, each having a diameter of 10 mm. The positive electrode sheet piece, the solid electrolyte sheet piece, and the negative electrode sheet piece were placed in this order in a PEEK resin mold with an inner diameter of 10 mm, and the mold was sandwiched between a pair of stainless steel metal punches from above and below. In this state, the layers were integrated by uniaxial pressing at a pressure of 150 MPa to obtain an all-solid-state battery.

(6) Evaluation of All-Solid-State Battery (Charge/Discharge Test)

Conductor wires were each connected to the top and bottom of the pair of metal punches, the all-solid-state battery was placed in a thermostatic chamber at 100°C, and a charge/discharge test of the all-solid-state battery was carried out as described below. First, the all-solid-state battery was charged under the conditions of a charge cut-off voltage of 2.7 V, a CC charge current of 0.1 C, and a CV charge current of 0.01 C. That is, the battery was charged at a constant current (CC) at 0.1 C rate until the voltage reached 2.7 V, and then charged at a constant voltage (CV) until the current value reached 0.01 C rate. The thus-charged all-solid-state battery was discharged under the conditions of a discharge cut-off voltage of 1.5 V, a CC discharge current of 0.1 C, and a CV discharge current of 0.01 C. That is, the battery was discharged at a constant current (CC) at 0.1 C rate until the voltage reached 1.5 V, and then discharged at a constant voltage (CV) until the current value reached 0.01 C rate. The series of charge and discharge operations are taken as one cycle. The coulombic efficiency in the 1st cycle was 45%, and the discharge capacity in the 1st cycle was 62 mAh/g per weight g of the positive electrode active material. The above charge-discharge cycles were repeated, and the coulombic efficiency and discharge capacity in the 3rd cycle were measured. The coulombic efficiency in the 3rd cycle was 93%. Further, the discharge capacity in the 3rd cycle was divided by the discharge capacity in the 1st cycle and then multiplied by 100, and the resulting value as the discharge capacity retention rate (i.e., cycle capacity retention rate) was 67%. Table 1 and Figure 2 show the results.

Example 2

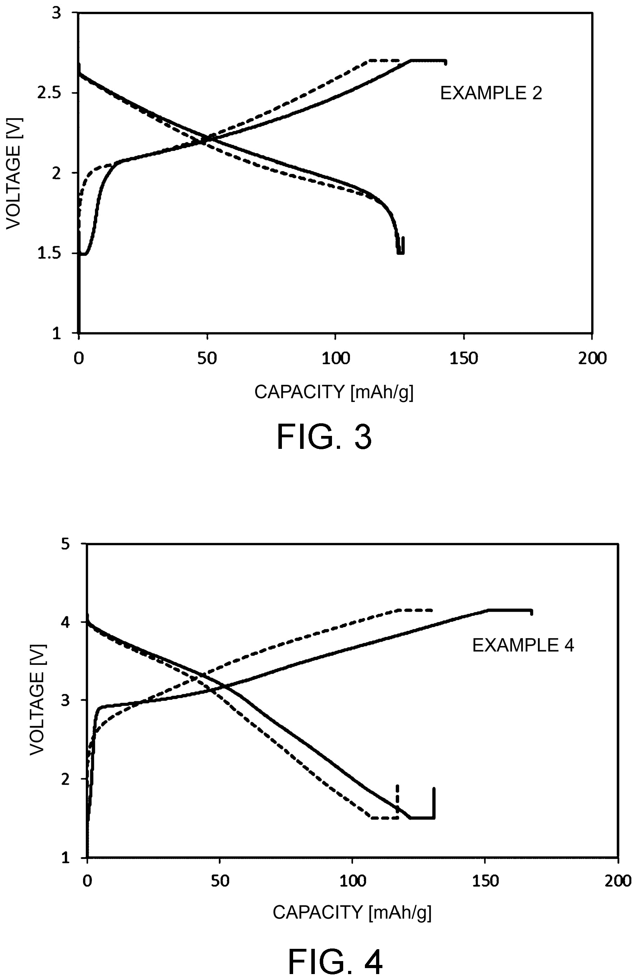

An all-solid-state battery was produced and evaluated in the same manner as in Example 1, except that 1) in place of the LYC solid electrolyte powder, a LAF-LSF solid electrolyte powder was produced, evaluated, and used in the following manner, and that 2) in the charge/discharge test, the charge-discharge cycles were further repeated and the coulombic efficiency and discharge capacity retention rate in the 10th cycle were also measured. The discharge capacity retention rate (i.e., cycle capacity retention rate) in the 10th cycle was calculated as a value obtained by dividing the discharge capacity in the 10th cycle by the discharge capacity in the 1st cycle, and then multiplying the resulting value by 100. The results were as shown in Table 1 and Figure 3.

(Production of LAF-LSF Solid Electrolyte Powder)

A LAF-LSF solid electrolyte powder was produced in the following manner in a glove box or dry room with a dew point of -40°C or lower. First, a commercially available LiF powder and a commercially available $AlF_3$ powder were weighed and mixed in a molar ratio of $LiF:AlF_3 = 3:1$, and the resulting mixture was treated in an Ar atmosphere at 900°C and then ground in a mortar, thereby obtaining a LAF powder having a composition of $Li_3AlF_6$. The resulting LAF powder and a commercially available $Li_2SiF_6$ powder were weighed and mixed in a molar ratio of LAF $(Li_3AlF_6):Li_2SiF_6 = 8:2$, and the resulting mixture was processed by mechanical milling using a planetary ball mill, thereby obtaining a LAF-LSF solid electrolyte powder having a composition of $Li_{2.8}Al_{0.8}Si_{0.2}F_{6.0}$.

(Measurement of Ion Conductivity)

The LAF-LSF solid electrolyte powder was placed in a mold equipped with a PEEK (polyether ether ketone) resin sleeve and upper and lower stainless steel punches, and molded by uniaxial pressing under a pressure of 400 MPa. Conductor wires were each connected to the upper and lower punches, impedance measurement was performed at room temperature, and the ion conductivity was calculated. As a result, the ion conductivity of the LAF-LSF solid electrolyte was $5 \times 10^{-6}$ S/cm or more at room temperature.

Example 3

An all-solid-state battery was produced and evaluated in the same manner as in Example 2, except that the temperature of the thermostatic chamber in the charge/discharge test was set to 150°C. The results were as shown in Table 1.

Example 4

An all-solid-state battery was produced and evaluated in the same manner as in Example 2, except that a SiO powder was used as the negative electrode active material. The results were as shown in Table 1 and Figure 4.

[Table 1]

Table 1

| | Composition | | | Operating temperature (°C) | 1st cycle | | 3rd cycle | | 10th cycle | |
|---|---|---|---|---|---|---|---|---|---|---|
| | Positive electrode active material | Negative electrode active material | Solid electrolyte | | Coulombic efficiency (%) | Discharge capacity per g of positive electrode active material (mAh/g) | Coulombic efficiency (%) | Discharge capacity retention rate (%) | Coulombic efficiency (%) | Discharge capacity retention rate (%) |
| Example 1* | NCM | LTO | LYC | 100 | 45 | 62 | 93 | 67 | - | - |
| Example 2 | NCM | LTO | LAF-LSF | 100 | 88 | 126 | 99 | 99 | 100 | 99 |
| Example 3 | NCM | LTO | LAF-LSF | 150 | 81 | 136 | 97 | 99 | 99 | 97 |
| Example 4 | NCM | SiO | LAF-LSF | 100 | 78 | 131 | 90 | 89 | 94 | 75 |

* indicates a comparative example.

**Claims**

1. A battery comprising:

   a positive electrode containing a positive electrode active material,
   a negative electrode containing a negative electrode active material capable of inserting and extracting carrier ions at 0.1 V (vs. Li/Li$^+$) or higher, and
   an electrolyte layer disposed between the positive electrode and the negative electrode,
   wherein at least one of the positive electrode, the negative electrode, and the electrolyte layer contains a solid electrolyte represented by the following composition formula:

   $$M^\alpha{}_a M^\beta{}_b M^\gamma{}_c X_d$$

   wherein M$^\alpha$ is at least one selected from the group consisting of Li, Na, and K; M$^\beta$ is an element that provides a trivalent cation; M$^\gamma$ is an element that provides a tetravalent cation; X is at least one selected from the group consisting of F, Cl, Br, and I; and a, b, c, and d satisfy:

   $$0.9(3-x) \leq a \leq 1.1(3-x),$$

   $$0.9(1-x) \leq b \leq 1.1(1-x),$$

   $$0.9x \leq c \leq 1.1x,$$

   $$5.4 \leq d \leq 6.6,$$

   and

   $$0 < x < 1.$$

2. The battery according to claim 1, wherein the positive electrode, the negative electrode, and the electrolyte layer each contain the solid electrolyte.

3. The battery according to claim 1 or 2, wherein M$\alpha$ contains Li.

4. The battery according to claim 1 or 2, wherein M$\beta$ contains Al.

5. The battery according to claim 1 or 2, wherein M$\gamma$ contains Si and/or Ge.

6. The battery according to claim 1 or 2, wherein X contains F.

7. The battery according to claim 1 or 2, wherein M$\alpha$ contains Li, M$\beta$ contains Al, M$^\gamma$ contains Si, and X contains F.

8. The battery according to claim 1 or 2, wherein the solid electrolyte is represented by $Li_a Al_b Si_c F_d$.

9. The battery according to claim 1 or 2, wherein the positive electrode active material contains at least one selected from the group consisting of lithium nickel manganate (LNMO), lithium nickel cobalt manganate (NCM), lithium cobaltate (LCO), lithium nickel cobalt aluminate (NCA), and lithium iron phosphate (LFP).

10. The battery according to claim 1 or 2, wherein the negative electrode active material contains at least one selected from the group consisting of lithium titanate (LTO), SiO, Si or Si alloy, and $TiO_2$.

11. The battery according to claim 1 or 2, wherein no part of the positive electrode, the negative electrode, and the electrolyte layer contains a sulfide.

EP 4 787 519 A1

FIG. 1

FIG. 2

12

FIG. 3

FIG. 4

## INTERNATIONAL SEARCH REPORT

International application No.

**PCT/JP2023/035660**

| A. | CLASSIFICATION OF SUBJECT MATTER |
|---|---|

*H01M 10/052*(2010.01)i; *H01M 4/13*(2010.01)i; *H01M 4/48*(2010.01)i; *H01M 4/485*(2010.01)i; *H01M 4/505*(2010.01)i; *H01M 4/525*(2010.01)i; *H01M 4/58*(2010.01)i; *H01M 4/62*(2006.01)i; *H01M 10/0562*(2010.01)i

FI: H01M10/052; H01M4/13; H01M4/48; H01M4/485; H01M4/505; H01M4/525; H01M4/58; H01M4/62 Z; H01M10/0562

According to International Patent Classification (IPC) or to both national classification and IPC

| B. | FIELDS SEARCHED |
|---|---|

Minimum documentation searched (classification system followed by classification symbols)

H01M10/052; H01M4/13; H01M4/48; H01M4/485; H01M4/505; H01M4/525; H01M4/58; H01M4/62; H01M10/0562

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2022-151964 A (TDK CORP.) 12 October 2022 (2022-10-12) | 1-4, 9-11 |
|  | claims, paragraphs [0045]-[0047], [0057]-[0058], [0089], [0092] |  |
| A |  | 5-8 |
| X | WO 2020/070956 A1 (PANASONIC INTELLECTUAL PROPERTY MANAGEMENT CO., LTD.) 09 April 2020 (2020-04-09) | 1-4, 9-11 |
|  | claims, paragraphs [0037]-[0053], [0092]-[0126], [0131], [0136] |  |
| A |  | 5-8 |
| X | WO 2019/146295 A1 (PANASONIC INTELLECTUAL PROPERTY MANAGEMENT CO., LTD.) 01 August 2019 (2019-08-01) | 1-3, 9-11 |
|  | claims, paragraphs [0046]-[0052], [0075]-[0078], [0090], [0117]-[0118], [0135], [0141] |  |
| A |  | 4-8 |

☑ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 December 2023** | **19 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

EP 4 787 519 A1

**INTERNATIONAL SEARCH REPORT**

International application No.

**PCT/JP2023/035660**

C.    DOCUMENTS CONSIDERED TO BE RELEVANT

| Category* | Citation of document, with indication, where appropriate, of the relevant passages | Relevant to claim No. |
|---|---|---|
| X | WO 2023/013390 A1 (PANASONIC INTELLECTUAL PROPERTY MANAGEMENT CO., LTD.) 09 February 2023 (2023-02-09) claims, paragraphs [0039], [0050]-[0052], [0060], [0068], [0077]-[0078], [0113], [0129]-[0147], [0157] | 1-4, 6, 9-11 |
| A | | 5, 7-8 |
| X | WO 2023/013305 A1 (PANASONIC INTELLECTUAL PROPERTY MANAGEMENT CO., LTD.) 09 February 2023 (2023-02-09) claims, paragraphs [0030], [0035], [0052]-[0054], [0057], [0072], [0092]-[0106], [0113]-[0115] | 1-4, 6, 9-11 |
| A | | 5, 7-8 |
| E, X | WO 2023/188111 A1 (NGK INSULATORS, LTD., NAGOYA INSTITUTE OF TECHNOLOGY) 05 October 2023 (2023-10-05) claim 12, paragraphs [0022]-[0026], [0044] | 1-11 |

Form PCT/ISA/210 (second sheet) (January 2015)

15

**INTERNATIONAL SEARCH REPORT**
Information on patent family members

International application No.

**PCT/JP2023/035660**

| Patent document cited in search report | | | Publication date (day/month/year) | Patent family member(s) | | | Publication date (day/month/year) |
|---|---|---|---|---|---|---|---|
| JP | 2022-151964 | A | 12 October 2022 | WO | 2022/210495 | A1 | |
| WO | 2020/070956 | A1 | 09 April 2020 | US 2021/0098825 A1 claims, paragraphs [0055]-[0072], [0129]-[0168], [0172]-[0173] EP 3863025 A1 CN 112136184 A | | | |
| WO | 2019/146295 | A1 | 01 August 2019 | US 2020/0350562 A1 claims, paragraphs [0098]-[0104], [0129]-[0139], [0170], [0216]-[0218], [0240], [0245] EP 3745498 A1 CN 111566848 A | | | |
| WO | 2023/013390 | A1 | 09 February 2023 | (Family: none) | | | |
| WO | 2023/013305 | A1 | 09 February 2023 | (Family: none) | | | |
| WO | 2023/188111 | A1 | 05 October 2023 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019135315 A

- WO 2023013390 A